# EUROPEAN PATENT APPLICATION

(11) **EP 2 587 790 A1**
(43) Date of publication of application: **01.05.2013**
(21) Application number: 12180134.4
(22) Date of filing: 10.08.2012
(51) Int. Cl.: H04N 5/232, H04N 13/02

(54) **Camera module and method for compensating images of the same**

(30) Priority: 31.10.2011 KR 20110112187
(71) Applicant: LG Innotek Co., Ltd., Seoul 100-714 (KR)
(72) Inventor: Sangyun, Oh, Seoul 100-714 (KR)
(74) Representative: Novagraaf Technologies

(57) **Abstract**

Disclosed is a camera module and a method for compensating images of the camera module, the method including: photographing respective images by a main camera mounted with an OIS (Optical Image Stabilization) unit and a sub camera; extracting a first image of a particular subject using the image photographed by the main camera, and extracting a second image of the particular subject using the image photographed by the sub camera; and driving the OIS unit of the main camera to compensate images so that the first image can be matched to the second image.

## Description

This application claims the benefit of earlier filing date and right of priority to Korean Patent Application No. 10-2011-0112187, filed on October 31, 2011, the contents of which are hereby incorporated by reference in their entirety.

### BACKGROUND OF THE DISCLOSURE

### Field

The present disclosure relates to a camera module and a method for compensating images of the camera module.

### Background

Generally, a technique for obtaining a 3-D image in an observer's sight is based on the principle of creation of parallax between the "left" and "right" images, which is perceived by the observer as a stereo effect. A stereoscopic viewing experience, which can also be called a three-dimensional (3-D) viewing experience, can be achieved by presenting different views of a scene to the left eye and the right eye of an observer. These different views represent the scene concerned viewed from slightly different angles, which provides an impression of depth. A stereoscopic rendering system needs to receive data from which the system can derive the different views that need to be presented to a viewer. This stereoscopic data may comprise, for example, a pair of visual images, one of them representing a left-eye view, and the other one representing a right-eye view. This is a classical approach.

In other words, three dimensional (3-D) imaging, or stereoscopy, is a technique used to create the illusion of depth in an image. In many cases, the stereoscopic effect of an image is created by providing a slightly different perspective of a particular image to each eye of a viewer. The slightly different left eye image and right eye image may present two perspectives of the same object, where the perspectives differ from each other in a manner similar to the perspectives that the viewer's eyes may naturally experience when directly viewing a three dimensional scene.

For example, in a frame of a stereoscopic 3-D film or video, a corresponding left eye frame intended for the viewer's left eye may be filmed from a slightly different angle (representing a first perspective of the object) from the corresponding right eye frame intended for the viewer's right eye (representing a second perspective of the object).

When the two frames are viewed simultaneously or nearly simultaneously, the difference between the left eye frame and the right eye frame provides a perceived depth to the objects in the frames, thereby presenting the combined frames in what appears as three dimensions.

One of the methods presenting different views of a scene to the left eye and the right eye of an observer uses polarizing eyeglasses, colored filter eyeglasses or screens. Furthermore, in order to realize an image for maximizing the 3-D effect, a relative position of two cameras is important, and if the two cameras are not aligned each at a predetermined position, the 3-D effect may be deteriorated by influences such as tilt and rotation. However, it is currently difficult due to accuracy problem in engineering process to perfectly align two cameras to a scope where two cameras are not affected by tilt and rotation.
A 3-D operating type stereoscopic camera apparatus is disclosed as a background technique by Korean Laid-Open Patent No.: 2007-0074996. However, technical developments and researches are being currently and continuously waged to solve various problems involving two cameras.

### SUMMARY OF THE DISCLOSURE

The present disclosure is to provide a camera module configured to match images photographed by two cameras by driving an OIS (Optical Image Stabilization) unit, and a method for compensating images of the camera module.

Technical subjects to be solved by the present disclosure are not restricted to the above-mentioned problems, and any other technical problems not mentioned so far will be clearly appreciated from the following description by skill in the art.

In one general aspect of the present disclosure, a camera module is provided, the camera comprising: a main camera mounted with an OIS (Optical Image Stabilization) unit to photograph a subject; and a sub camera distanced from the main camera to photograph the subject.

In some exemplary embodiments of the present disclosure, the camera module may further comprise a controller configured to control the main camera and the sub camera for obtainment of a 2-D image or a 3-D image.

In some exemplary embodiments of the present disclosure, the camera module may further comprise: an image signal processor outputting a control signal, in a case a position of the subject is not matched on images photographed by the main camera and the sub camera; and an OIS driving unit driving the OIS unit by receiving the control signal outputted by the image signal processor to match an image photographed by the main camera to an image photographed by the sub camera.

In some exemplary embodiments of the present disclosure, the OIS unit is configured to match the image photographed by the main camera to the image photographed by the sub camera by tilting and rotating the main camera.

In some exemplary embodiments of the present disclosure, the OIS unit is configured to match the image photographed by the main camera to the image photographed by the sub camera, in consideration of the images photographed by the main camera and the sub camera having been shifted as much as a distance separated between the main camera and the sub camera.

In another general aspect of the present disclosure, a method for compensating images of a camera module, the method comprising: photographing respective images by a main camera mounted with an OIS unit and a sub camera; extracting a first image of a particular subject using the image photographed by the main camera, and extracting a second image of the particular subject using the image photographed by the sub camera; and driving the OIS unit of the main camera to compensate images so that the first image can be matched to the second image.

In some exemplary embodiments of the present disclosure, the OIS unit is configured to match the first image to the second image by tilting and rotating the main camera.

In some exemplary embodiments of the present disclosure, the step of compensating the images to allow the first image to be matched to the second image while the main camera is distanced from the sub camera is a step of matching the first image to the second image, in consideration of the first image and the second image having been shifted as much as a distance separated between the main camera and the sub camera.

In still another general aspect of the present disclosure, the method for compensating images of a camera module, the method comprising: photographing, by a main camera mounted with an OIS (Optical Image Stabilization) unit and a sub camera, an image of a subject; and compensating to allow a position of a subject in an image photographed by the main camera and a position of the subject in an image photographed by the sub camera to match by driving the OIS unit of the main camera.

In some exemplary embodiments of the present disclosure, the method further comprises determining whether a position of a subject in the image photographed by the main camera matches a position of the subject in the image photographed by the sub camera, in between the step of photographing, by a main camera mounted with an OIS (Optical Image Stabilization) unit and a sub camera, an image of a subject, and the step of compensating to allow a position of a subject in an image photographed by the main camera and a position of the subject in an image photographed by the sub camera to match by driving the OIS unit of the main camera, wherein the step of compensating to allow a position of a subject in an image photographed by the main camera and a position of the subject in an image photographed by the sub camera to match by driving the OIS unit of the main camera, is performed, in a case the position of the subject in the image photographed by the sub camera does not match to the position of the subject in the image photographed by the sub camera.

In some exemplary embodiments of the present disclosure, the step of matching the position of the subject in the image photographed by the sub camera to the position of the subject in the image photographed by the sub camera, includes matching positions of subject in the images photographed by the main camera and the sub camera based on one of a horizontal axis of an image frame, a vertical axis of the image frame and both axes of the image frame.

In some exemplary embodiments of the present disclosure, the step of matching positions of subject in the images photographed by the main camera and the sub camera based on one of a horizontal axis of an image frame, a vertical axis of the image frame and both axes of the image frame, includes measuring positions of subjects of images photographed by the main camera and the sub camera on the horizontal axis and the vertical axis of the image frame, and matching the positions of images photographed by the main camera and the sub camera based on one of a horizontal axis of an image frame, a vertical axis of the image frame and both axes of the image frame by driving the OIS unit, using the measured value.

In some exemplary embodiments of the present disclosure, the OIS unit is configured to match the position of subject in the image photographed by the main camera to the position of subject in the image photographed by the sub camera by tilting and rotating the main camera.

In some exemplary embodiments of the present disclosure, the main camera is distanced from the sub camera.

In some exemplary embodiments of the present disclosure, the step of compensating to allow the position of the subject in the image photographed by the main camera and the position of the subject in the image photographed by the sub camera to match by driving the OIS unit of the main camera, includes matching in consideration of the position of the subject in the image photographed by the main camera and the position of the subject in the image photographed by the sub camera having been shifted as much as a distance separated between the main camera and the sub camera.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

It is to be understood that both the foregoing general description and the following detailed description of the present disclosure are exemplary and explanatory and are intended to provide further explanation of the disclosure as claimed.

The camera module and the method for compensating images of the camera module according to the present disclosure have an advantageous effect in that one camera is mounted with an OIS unit, in a camera module mounted with two cameras, and the OIS unit is operated to compensate so that images photographed by the two cameras can be matched, in case two images photographed by the two cameras do not match.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a flowchart illustrating a method for compensating images of a camera module according to a first exemplary embodiment of the present disclosure;
FIG. 2 is a photograph illustrating a method for compensating images of a camera module according to a first exemplary embodiment of the present disclosure;
FIG. 3 is a flowchart illustrating a method for compensating images of a camera module according to a second exemplary embodiment of the present disclosure;
FIG. 4 is a flowchart illustrating a method for compensating images of a camera module according to a third exemplary embodiment of the present disclosure;
FIGS. 5a and 5b are conceptual views illustrating images photographed by a main camera and a sub camera in the methods for compensating images of a camera module according to second and third exemplary embodiments of the present disclosure; and
FIG. 6 is a block diagram illustrating a camera module according to an exemplary embodiment of the present disclosure.

### DETAILED DESCRIPTION

Now, the present disclosure will be described in detail with reference to the accompanying drawings.

The suffixes 'module' and 'unit' may be used for elements in order to facilitate the disclosure. Significant meanings or roles may not be given to the suffixes themselves and it is understood that the 'module' and 'unit' may be used together or interchangeably.

Hereinafter, exemplary embodiments of the present disclosure are described in detail with reference to the accompanying drawings. In the drawings, sizes or shapes of constituent elements may be exaggerated for clarity and convenience.

Particular terms may be defined to describe the disclosure in the best mode as known by the inventors. Accordingly, the meaning of specific terms or words used in the specification and the claims should not be limited to the literal or commonly employed sense, but should be construed in accordance with the spirit and scope of the disclosure. The definitions of these terms therefore may be determined based on the contents throughout the specification.

The description of the various embodiments is to be construed as exemplary only for illustrative purposes, and does not describe every possible instance of the disclosure. Therefore, it should be understood that various changes may be made and equivalents may be substituted for elements of the disclosure.

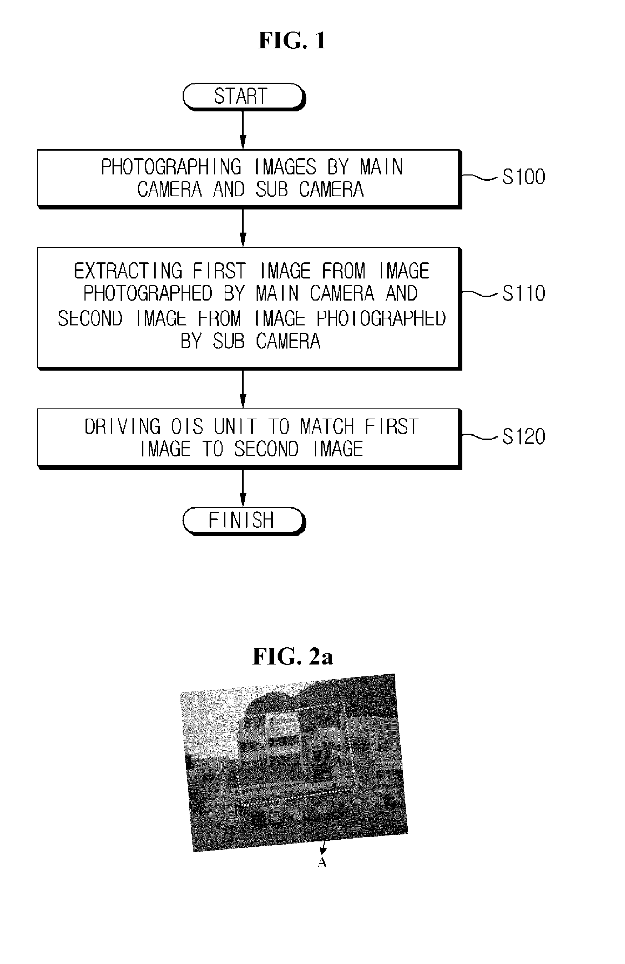

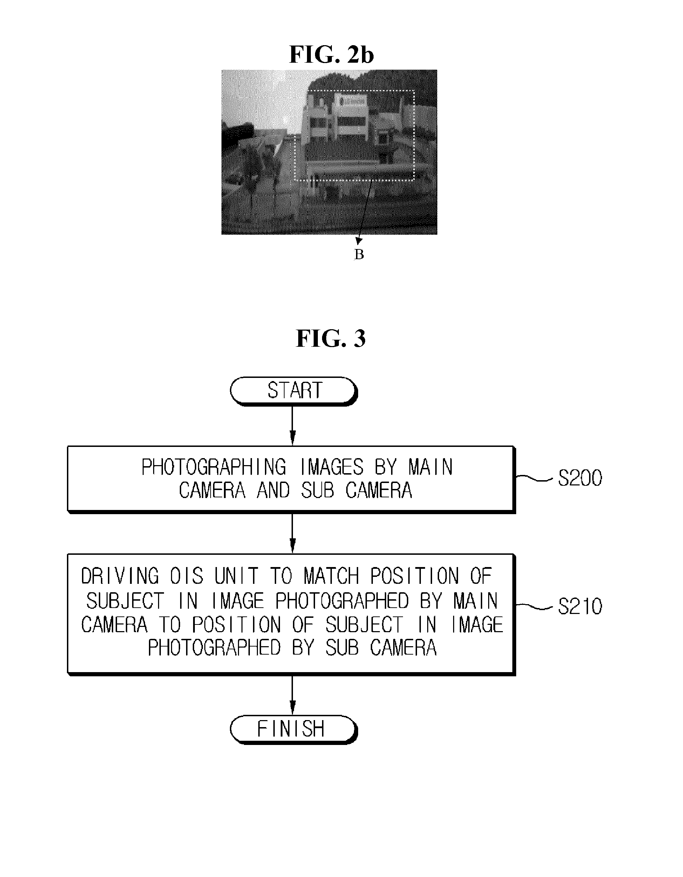

FIG. 1 is a flowchart illustrating a method for compensating images of a camera module according to a first exemplary embodiment of the present disclosure, and FIG. 2 is a photograph illustrating a method for compensating images of a camera module according to a first exemplary embodiment of the present disclosure

The method for compensating images of a camera module includes: photographing respective images by a main camera mounted with an OIS unit and a sub camera (S100); extracting a first image of a particular subject using the image photographed by the main camera, and extracting a second image of the particular subject using the image photographed by the sub camera (S110); and driving the OIS unit of the main camera to compensate images so that the first image can be matched to the second image (S120).

That is, an image as in FIG. 2a is obtained by the main camera mounted with the OIS unit, and in a case an image as in FIG. 2b is obtained by the sub camera that does not match to the image obtained by the main camera, a first image (A) of the particular subject is extracted from the image photographed by the main camera, and a second image (B) is extracted from the image photographed by the sub camera (S110).

At this time, the matching of images by the main camera and the sub camera is not a one-on-one matching between two images but a matching in consideration of movement as much as binocular disparity of two cameras physically spaced apart at a predetermined distance.

That is, the matching of the first image to the second image is a matching in consideration of the images photographed by the main camera and the sub camera having been shifted as much as a distance separated between the main camera and the sub camera. Thereafter, the OIS unit of the main camera is driven to compensate so that the first image can match to the second image. At this time, the OIS unit tilts and rotates the main camera to match the first image to the second image.

FIG. 3 is a flowchart illustrating a method for compensating images of a camera module according to a second exemplary embodiment of the present disclosure, and

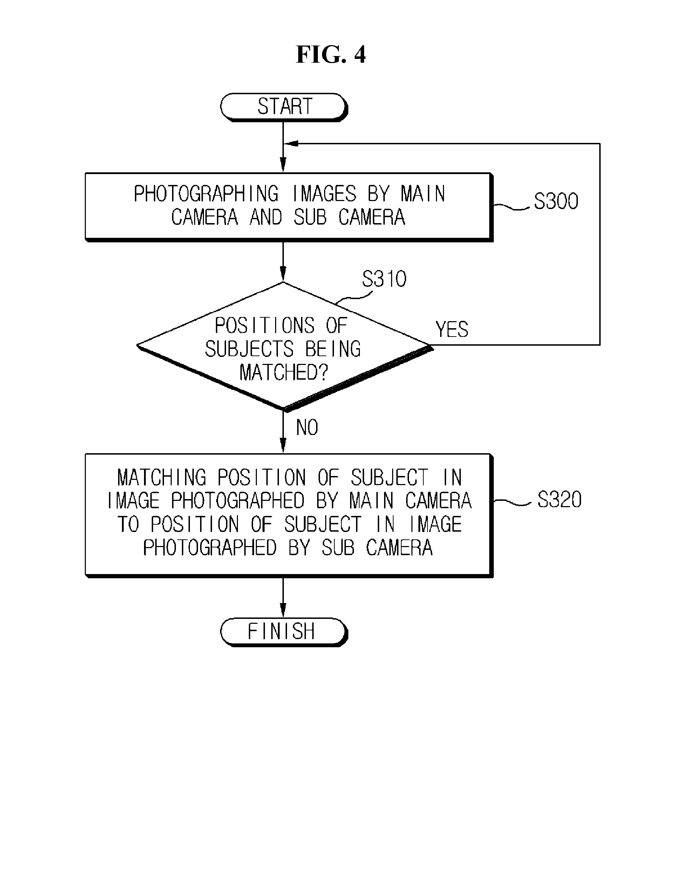

FIG. 4 is a flowchart illustrating a method for compensating images of a camera module according to a third exemplary embodiment of the present disclosure.

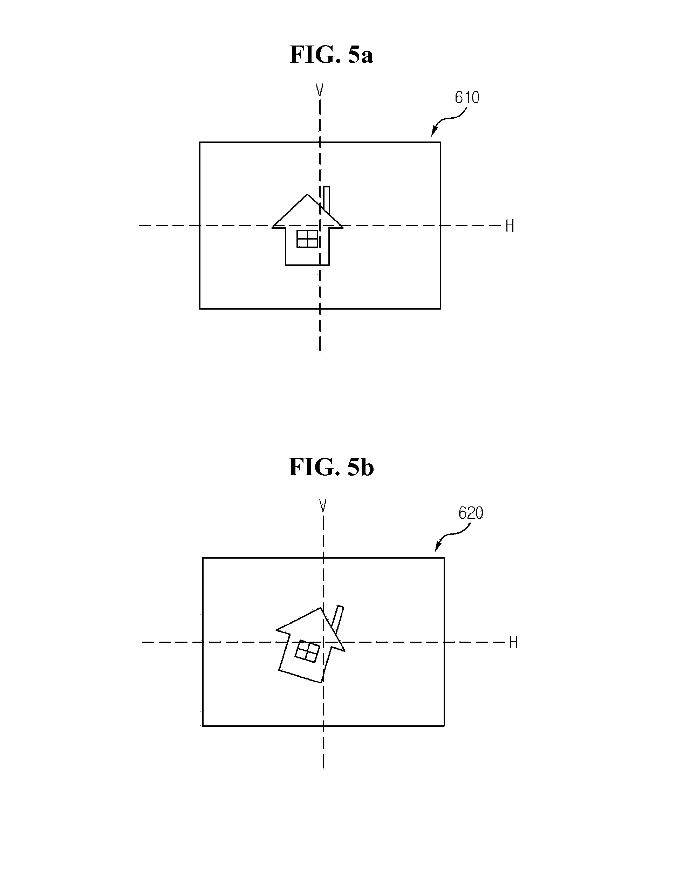

Referring to FIG. 3, the method for compensating images of a camera module according to a second exemplary embodiment of the present disclosure includes photographing respective images of a subject by a main camera mounted with an OIS (Optical Image Stabilization) unit and a sub camera (S200), and compensating to allow a position of a subject in an image photographed by the main camera and a position of the subject in an image photographed by the sub camera to match by driving the OIS unit of the main camera (S210).
That is, the method for compensating images of a camera module according to a second exemplary embodiment of the present disclosure is to match the positions of subjects in images photographed by the main camera and the sub camera based on one of a horizontal axis of an image frame, a vertical axis of the image frame and both axes of the image frame photographed and obtained by the main camera and the sub camera, details of which will be provided reference to FIGS. 5a and 5b.

Referring to FIG. 4, the method for compensating images of a camera module according to a third exemplary embodiment of the present disclosure includes photographing images of a subject using a main camera mounted with an OIS (Optical Image Stabilization) unit and a sub camera (S300), and determining whether a position of a subject in an image photographed by the main camera matches a position of the subject in an image photographed by the sub camera (S310).

Successively, compensation is made to allow a position of a subject in an image photographed by the main camera and a position of the subject in an image photographed by the sub camera to match by driving the OIS unit of the main camera, in a case the position of the subject in the image photographed by the sub camera does not match to the position of the subject in the image photographed by the sub camera (S320).

The method for compensating images of a camera module according to a third exemplary embodiment of the present disclosure further includes determining whether a position of a subject in the image photographed by the main camera matches a position of the subject in the image photographed by the sub camera, in between the S200 and S210 according to the second exemplary embodiment.

To be more specific, the step of S310 determines whether a position of a subject in an image photographed by the main camera matches a position of the subject in an image photographed by the sub camera, and the OIS unit of the main camera is operated only if whether a position of a subject in an image photographed by the main camera fails to match a position of the subject in an image photographed by the sub camera. Thus, the OIS unit of the main camera is not operated if whether a position of a subject in an image photographed by the main camera matches a position of the subject in an image photographed by the sub camera.

FIGS. 5a and 5b are conceptual views illustrating images photographed by a main camera and a sub camera in the methods for compensating images of a camera module according to second and third exemplary embodiments of the present disclosure.

The methods for compensating images of a camera module according to the second and third exemplary embodiments of the present disclosure include operating the OIS unit to match a position of a subject in an image photographed by the main camera to a position of the subject in an image photographed by the sub camera, whereby mismatch of relative positions of two cameras is compensated.

That is, in a case FIG. 5a illustrates an image photographed by a sub camera, and FIG. 5b illustrates an image photographed by a main camera, a subject of the image photographed by the sub camera and the subject of the image photographed by the main camera are positioned inside image frames (610, 620). At this time, position data of the subject can be obtained based on a horizontal axis (H) and a vertical axis (V) of the image frames.

Thus, measurement is made on how the subjects of the image photographed by the main camera and the sub camera is positioned on the horizontal axis (H) and the vertical axis (V) of the image frames (610, 620) to match the positions of images photographed by the main camera and the sub camera based on one of the horizontal axis (H), the vertical axis (V) and both axes of the image frames by driving the OIS unit, using the measured value. At this time, the image photographed by the sub camera is left untouched, and the position of the subject in the image photographed by the sub camera is adjusted by operation of the OIS unit to compensate the mismatch of relative positions of two cameras.

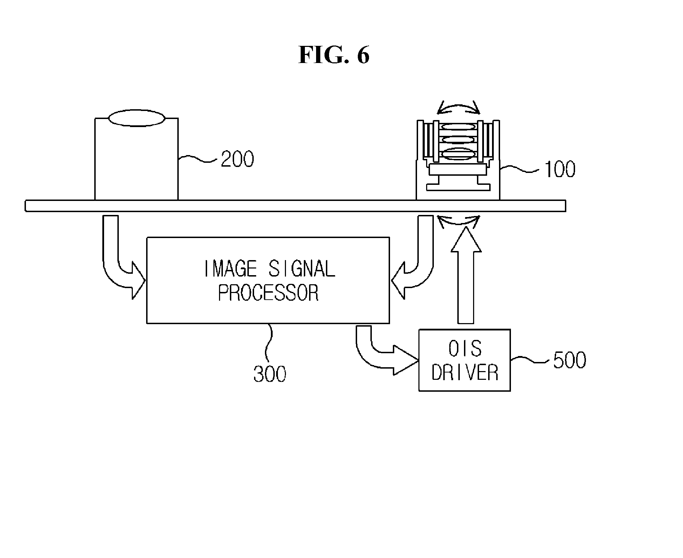

FIG. 6 is a block diagram illustrating a camera module according to an exemplary embodiment of the present disclosure.

The camera module according to an exemplary embodiment of the present disclosure includes a main camera (100) mounted with an OIS (Optical Image Stabilization) unit to photograph a subject; and a sub camera (200) distanced from the main camera to photograph the subject, an image signal processor (300) outputting a control signal, in a case a position of the subject is not matched on images photographed by the main camera (100) and the sub camera (200), and an OIS driving unit (500) driving the OIS unit by receiving the control signal outputted by the image signal processor (300).

The position of the subject is calculated based on any one of a horizontal axis, a vertical axis or both axes of a frame of the image. Thus, the images photographed by the main camera (100) and the sub camera (200) are inputted to the image signal processor (300) to determine whether positions of subject are mismatched in frames of images photographed by the main camera (100) and the sub camera (200), and to output a control signal to the OIS controller (500) if the positions of subject are mismatched.

Furthermore, the OIS driving unit (500) drives the OIS unit using the control signal to tilt and rotate the main camera, and to compensate the image photographed by the main camera (100), whereby the image photographed by the main camera (100) is matched to the image photographed by the sub camera (200).

The camera module according to the exemplary embodiments of the present disclosure is such that the main camera (100) and the sub camera (200) are spaced apart to obtain a 3-D image, where an image photographed by the main camera (100) is an image by the right eye, and an image photographed by the sub camera (200) is an image by the left eye.

That is, according to the camera module according to the exemplary embodiments of the present disclosure, the sub camera (200) is not driven while only the main camera (100) is operated to obtain a 2-D image and simultaneously shake of images can be compensated by the OIS unit of the main camera (100). To be more specific, the camera module according to the exemplary embodiments of the present disclosure may further include a controller configured to control the main camera (100) and the sub camera (200) for obtainment of a 2-D image or a 3-D image.

The above-mentioned camera module and method for compensating the camera module according to the present disclosure may, however, be embodied in many different forms and should not be construed as limited to the embodiments set forth herein. Thus, it is intended that embodiments of the present disclosure may cover the modifications and variations of this disclosure provided they come within the scope of the appended claims and their equivalents.

While particular features or aspects may have been disclosed with respect to several embodiments, such features or aspects may be selectively combined with one or more other features and/or aspects of other embodiments as may be desired.

The camera module and the method for compensating images of the camera module according to the present disclosure have an industrial applicability in that one camera is mounted with an OIS unit, in a camera module mounted with two cameras, and the OIS unit is operated to compensate so that images photographed by the two cameras can be matched, in case two images photographed by the two cameras do not match.

## Claims

1. A camera module comprising: a main camera mounted with an OIS (Optical Image Stabilization) unit to photograph a subject; and a sub camera distanced from the main camera to photograph the subject.

2. The camera module of claim 1, further comprising a controller configured to control the main camera and the sub camera for obtainment of a 2-D image or a 3-D image.

3. The camera module of claim 1, further comprising: an image signal processor outputting a control signal, in a case a position of the subject is not matched on images photographed by the main camera and the sub camera; and an OIS driving unit driving the OIS unit by receiving the control signal outputted by the image signal processor to match an image photographed by the main camera to an image photographed by the sub camera.

4. The camera module of claim 1, wherein the OIS unit is configured to match the image photographed by the main camera to the image photographed by the sub camera by tilting and rotating the main camera.

5. The camera module of claim 1, wherein the OIS unit is configured to match the image photographed by the main camera to the image photographed by the sub camera, in consideration of the images photographed by the main camera and the sub camera having been shifted as much as a distance separated between the main camera and the sub camera.

6. A method for compensating images of a camera module, the method comprising: photographing respective images by a main camera mounted with an OIS unit and a sub camera; extracting a first image of a particular subject using the image photographed by the main camera, and extracting a second image of the particular subject using the image photographed by the sub camera; and driving the OIS unit of the main camera to compensate images so that the first image can be matched to the second image.

7. The method of claim 6, wherein the OIS unit is configured to match the first image to the second image by tilting and rotating the main camera.

8. The method of claim 6, wherein the step of compensating the images to allow the first image to match to the second image while the main camera is distanced from the sub camera is a step of matching the first image to the second image, in consideration of the first image and the second image having been shifted as much as a distance separated between the main camera and the sub camera.

9. A method for compensating images of a camera module, the method comprising: photographing, by a main camera mounted with an OIS (Optical Image Stabilization) unit and a sub camera, an image of a subject; and compensating to allow a position of a subject in an image photographed by the main camera and a position of the subject in an image photographed by the sub camera to match by driving the OIS unit of the main camera.

10. The method of claim 9, further comprising determining whether a position of a subject in the image photographed by the main camera matches a position of the subject in the image photographed by the sub camera, in between the step of photographing, by a main camera mounted with an OIS (Optical Image Stabilization) unit and a sub camera, an image of a subject, and the step of compensating to allow a position of a subject in an image photographed by the main camera and a position of the subject in an image photographed by the sub camera to match by driving the OIS unit of the main camera, wherein the step of compensating to allow a position of a subject in an image photographed by the main camera and a position of the subject in an image photographed by the sub camera to match by driving the OIS unit of the main camera, is performed, in a case the position of the subject in the image photographed by the sub camera does not match to the position of the subject in the image photographed by the sub camera.

11. The method of claim 10, wherein the step of matching the position of the subject in the image photographed by the sub camera to the position of the subject in the image photographed by the sub camera, includes matching positions of subject in the images photographed by the main camera and the sub camera based on one of a horizontal axis of an image frame, a vertical axis of the image frame and both axes of the image frame.

12. The method of claim 11, wherein the step of matching positions of subject in the images photographed by the main camera and the sub camera based on one of a horizontal axis of an image frame, a vertical axis of the image frame and both axes of the image frame, includes measuring positions of subjects of images photographed by the main camera and the sub camera on the horizontal axis and the vertical axis of the image frame, and matching the positions of images photographed by the main camera and the sub camera based on one of a horizontal axis of an image frame, a vertical axis of the image frame and both axes of the image frame by driving the OIS unit, using the measured value.

13. The method of claim 9, wherein the OIS unit is configured to match the position of subject in the image photographed by the main camera to the position of subject in the image photographed by the sub camera by tilting and rotating the main camera.

14. The method of claim 9, wherein the main camera is distanced from the sub camera.

15. The method of claim 14, wherein the step of compensating to allow the position of the subject in the image photographed by the main camera and the position of the subject in the image photographed by the sub camera to match by driving the OIS unit of the main camera, includes matching in consideration of the position of the subject in the image photographed by the main camera and the position of the subject in the image photographed by the sub camera having been shifted as much as a distance separated between the main camera and the sub camera.
